# EUROPEAN PATENT SPECIFICATION

(11) **EP 2 121 425 B1**
(45) Date of publication and mention of the grant of the patent: **13.04.2016**
(21) Application number: 08766457.9
(22) Date of filing: 19.06.2008
(51) Int. Cl.: B63B 25/08, F17C 5/06, F17C 9/02

(54) **FUEL GAS SUPPLY SYSTEM AND METHOD OF SHIP**
KRAFTSTOFF-GAS-ZUFUHRSYSTEM UND LIEFERVERFAHREN
SYSTÈME D'ALIMENTATION DE GAZ COMBUSTIBLE ET PROCÉDÉ POUR UN NAVIRE

(30) Priority: 19.07.2007 KR 20070072242; 27.11.2007 KR 20070121558; 30.11.2007 KR 20070123679; 05.03.2008 KR 20080020356
(43) Date of publication of application: 25.11.2009
(60) Divisional application: 11009863.9
(73) Proprietor: DAEWOO SHIPBUILDING & MARINE ENGINEERING CO., LTD, Seoul 100-180 (KR)
(72) Inventor: KWON, Soon Been, Seoul 137-030 (KR); KIM, Nam Soo, Suwon-si Gyeonggi-do 442-150 (KR); CHO, Ik Kyu, Goyang-si Gyeonggi-do 412-220 (KR); LEE, Jung Han, Geoje-si Gyeongsangnam-do 656-753 (KR); CHOI, Dong Kyu, Geoje-si Gyeongsangnam-do 656-757 (KR); PARK, Hyun Ki, Geoje-si Gyeongsangnam-do 656-752 (KR)
(74) Representative: Jehle, Volker Armin
(86) International application number: PCT/KR2008/003497
(87) International publication number: WO 2009/011497

(56) References cited:
- EP-A1- 1 672 269
- EP-A1- 1 990 272
- WO-A1-97/32157
- JP-A- 2006 348 752
- KR-A- 20060 122 155
- KR-B1- 100 441 857
- KR-B1- 100 547 696

## Description

### Technical Field

The present invention relates to a fuel gas supply system and method of a ship, and more particularly, to a fuel gas supply system and method of a ship for efficiently supplying fuel gas from an LNG tank to a high-pressure gas injection engine in the ship, ship which is not an LNG carrier.

### Background Art

Generally, natural gas is turned into a liquefied natural gas (hereinafter called "LNG") at a cryogenic temperature in a liquefaction plant, and then transported over long distances to a destination by an LNG carrier.

As liquefaction of natural gas occurs at a cryogenic temperature of -163 degrees Celsius at ambient pressure, LNG is likely to be vaporized even when the temperature of the LNG is slightly higher than -163 degrees Celsius at ambient pressure. In an LNG carrier having an LNG storage tank which is thermally-insulated, as heat is continually transmitted from the outside to the LNG in the LNG storage tank, the LNG is continually vaporized and boil-off gas is generated in the LNG storage tank during the transportation of LNG by the LNG carrier.

In an LNG carrier, if boil-off gas is accumulated in an LNG storage tank, the pressure in the LNG storage tank excessively increases. Consequently, to treat the boil-off gas generated in the LNG storage tank, the boil-off gas is used as a fuel for a ship propulsion engine or burned in a gas combustor.

In case where a high-pressure gas injection engine, for example, MEGI engine manufactured by MAN B&W Diesel Inc., is used as a ship propulsion engine of an LNG carrier, a multi-stage compressor is used in a conventional fuel gas supply system to compress boil-off gas at a high pressure. This multi-stage compression has problems that the fuel gas supply system becomes very complex, and that an excessive amount of power is required to compress the boil-off gas in a gaseous state at a high pressure.

A ship such as a bulk carrier, a container ship, a crude oil tanker and chemical tanker could be propelled using LNG as fuel. Such a ship has an LNG fuel tank for storing LNG as fuel and uses the same engine as the LNG carrier. It is known by the prior art see EP 1 990 272 to have a gas supply system of a ship which is an LNG carrier.

### Disclosure of Invention

### Technical Problem

To solve the above-mentioned problems posed by the prior art, the present invention is to provide a fuel gas supply system and method of a ship which can simplify the configuration, reduce power requirements, and prevent an excessive pressure increase due to accumulation of boil-off gas in an LNG tank, in supplying fuel gas to a high-pressure gas injection engine of the ship.

### Technical Solution

To achieve the above-mentioned purposes, the fuel gas supply system of a ship according to one embodiment of the present invention, as a system for supplying fuel gas to a high-pressure gas injection engine of a ship, is characterized in that LNG is extracted from an LNG tank of the ship, compressed at a high pressure, gasified, and then supplied to the high-pressure gas injection engine, as defined by claim 1.

Also, the fuel gas supply method of a ship according to one embodiment of the present invention, as a method for supplying fuel gas to a high-pressure gas injection engine of the ship, is characterized in that LNG is extracted from an LNG tank of the ship, compressed to meet the pressure requirements for the high-pressure gas injection engine, gasified, and then supplied to the high-pressure gas injection engine, as defined by claim 12.

### Advantageous Effects

According to the fuel gas supply system and method of an LNG carrier of the present invention, LNG is extracted from an LNG storage tank, compressed at a high pressure, gasified, and supplied to a high-pressure gas injection engine. Consequently, the fuel gas supply system and method have advantages of simplifying the configuration, reducing power requirements, and preventing an excessive pressure increase due to accumulation of boil-off gas in the LNG storage tank, in supplying fuel gas to the high-pressure gas injection engine in an LNG carrier.

### Brief Description of the Drawings

Figure 1 is a schematic view of a fuel gas supply system of an LNG carrier according to an embodiment of the present invention;
Figure 2 is a schematic view of a fuel gas supply system of an LNG carrier according to another embodiment of the present invention; and
Figure 3 is a schematic view of a fuel gas supply system of an LNG carrier according to yet another embodiment of the present invention.

### Best Mode for Carrying Out the Invention

Preferred embodiments of the present invention will be described in detail below with references to the accompanying drawings.

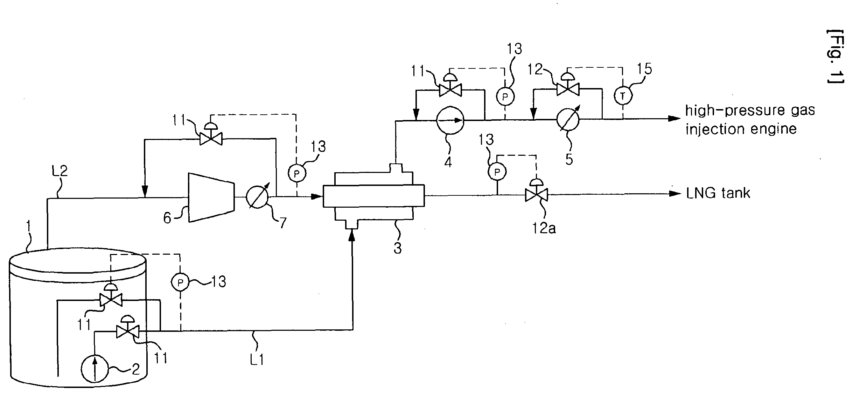

Figure 1 is a schematic view of a fuel gas supply system of a ship according to an embodiment of the present invention. As illustrated in Figure 1, the fuel gas supply system of a ship is to supply fuel gas to a high-pressure gas injection engine of a ship.

The fuel gas supply system of Figure 1 includes a fuel gas supply line L1 for supplying LNG extracted from an LNG tank 1 of a ship to a high-pressure gas injection engine of the ship, and a heat exchanger 3 installed in the middle of the fuel gas supply line L1 so as to exchange heat between LNG and boil-off gas extracted from the LNG tank 1.

The ship may be a ship such as a bulk carrier, a container ship, a crude oil tanker and chemical tanker that could be propelled using LNG as fuel. Such a ship has an LNG fuel tank for storing LNG as fuel. In this case, the LNG tank 1 is an LNG fuel tank for storing LNG as fuel.

The fuel gas supply line L1 upstream of the heat exchanger 3 has a first pump 2 for compressing the LNG to meet the pressure requirements for the high-pressure gas injection engine and supplying the LNG toward the high-pressure gas injection engine. According to this embodiment, the first pump 2 is illustrated as installed in the LNG tank 1, but may be installed in the fuel gas supply line L1 upstream of the heat exchanger 3 outside the LNG tank 1. Also, the first pump 2 may comprise one pump or two pumps.

A boil-off gas liquefaction line L2 is connected from an upper portion of the LNG tank 1, passing through the heat exchanger 3, to one side of the LNG tank 1. The boil-off gas is extracted from an upper portion of the LNG tank 1, passes through the heat exchanger 3, and is returned to one side of the LNG tank 1.

In the heat exchanger 3, the LNG exchanges heat with the boil-off gas to increase the temperature of the LNG and then the LNG is supplied toward the high-pressure gas injection engine, and the boil-off gas is liquefied by heat exchange with the LNG and then returned to the LNG tank 1. If the boil-off gas in an upper portion of the LNG tank 1 is liquefied and returned to a lower portion of the LNG tank 1, it can prevent the pressure in the LNG tank 1 from excessively increasing due to accumulation of the boil-off gas in the LNG tank 1.

In one embodiment, a second pump 4 is installed in the fuel gas supply line L1 downstream of the heat exchanger 3 so as to compress the LNG which has exchanged heat with the boil-off gas to meet the pressure requirements for the high-pressure gas injection engine, and then to supply the compressed LNG to the high-pressure gas injection engine.

A heater 5 is installed in the fuel gas supply line L1 downstream of the second pump 4 so as to heat the LNG which has exchanged heat in the heat exchanger 3, and then to supply the heat exchanged LNG to the high-pressure gas injection engine.

In one embodiment, boil-off gas compressor 6 and a cooler 7 are installed in the boil-off gas liquefaction line L2 upstream of the heat exchanger 3 so as to compress and cool the boil-off gas extracted from the LNG tank 1 before the exchange of heat between the boil-off gas and the LNG.

In a case where the high-pressure gas injection engine is, for example, an MEGI engine manufactured and sold by MAN B&W Diesel Inc., the pressure of the fuel gas required for the MEGI engine can range from 200 to 300 bar (gauge pressure), preferably 250 bar (gauge pressure). The LNG is compressed to 27 bar (gauge pressure) in the first pump 2, and the temperature of the LNG increases from approximately -163 degrees Celsius to approximately -100 degrees Celsius while passing through the heat exchanger 3, and the LNG in a liquid state is supplied to the second pump 4 and compressed to approximately 250 bar (gauge pressure) in the second pump 4 (as it is in a supercritical state, there is no division between liquid and gas states), then heated in the heater 5, and then supplied to the high-pressure gas injection engine. In this case, as the pressure of the LNG supplied to the heat exchanger 3 is high, the LNG, though its temperature increases by passing through the heat exchanger, is not gasified.

On the other hand, in case where the high-pressure gas injection engine is, for example, a gas turbine engine, the pressure of fuel gas required for the gas turbine engine can range from 20 to 40 bar (gauge pressure), preferably 30 bar (gauge pressure). The LNG is compressed to 30 bar (gauge pressure) in the first pump 2, and part of the LNG is gasified while passing through the heat exchanger 3, supplied to the heater 5 and heated in the heater 5, and then supplied to the high-pressure gas injection engine. In this case, the second pump 4 is not necessary.

Flow rate control-type pressure control valves 11 are installed in the fuel gas supply line L1 at the front and rear of the first pump 2, in the fuel gas supply line L1 at the front and rear of the second pump 4, and in the boil-off gas liquefaction line L2 at the front and rear of the boil-off gas compressor 6 and the cooler 7, so as to control the pressure of the fluid passing through the lines.

Also, flow rate control-type temperature control valves 12 are installed in the fuel gas supply line 11 at the front and rear of the heater 5 so as to control the temperature of the fluid passing though the line.

Pressure sensors 13 are connected between the fuel gas supply line L1 at a rear end of the first pump 2, the fuel gas supply line L1 at a rear end of the second pump 4, the boil-off gas liquefaction line L2 at a rear end of the boil-off gas compressor 6 and the cooler 7, and the pressure control valves 11. Also, temperature sensors 15 are connected between the fuel gas supply line L1 at a rear end of the heater 5 and the temperature control valves 12.

The flow rate control-type pressure control valves 11 and temperature control valve 12 control the flow rate, thereby controlling the pressure or temperature of the fluid passing through themselves.

Also, an expandable pressure control valve 12a is installed in the middle of the boil-off gas liquefaction line L2 downstream of the heat exchanger 3 so as to control the pressure of the fluid passing through the line L2.

The pressure sensor 13 is connected between the pressure control valve 12a and the boil-off gas liquefaction line L2 at a front end of the pressure control valve 12a installed in the boil-off gas liquefaction line L2 downstream of the heat exchanger 3.

The pressure control valve 12a installed in the boil-off gas liquefaction line L2 downstream of the heat exchanger 3 expands the passing fluid so as to correspond to the pressure which is obtained by adding the pressure of the LNG tank 1 to the pressure due to water head of the LNG in the LNG tank 1, thereby controlling the pressure, and the temperature of the LNG decreases by the expansion.

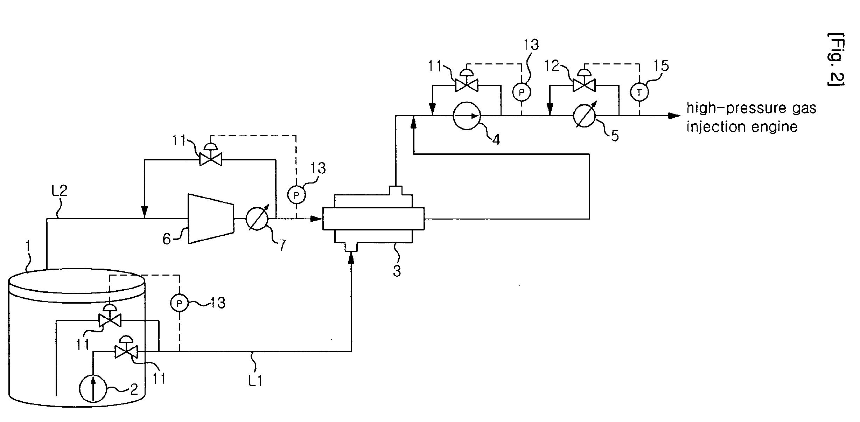

In one embodiment, as illustrated in Figure 2, the boil-off liquefaction line L2 may be configured such that it passes through the heat exchanger 3 from an upper portion of the LNG tank 1 and is connected between the heat exchanger 3 and the heater 5 in the middle of the fuel gas supply line L1. According to this configuration, boil-off gas is liquefied by heat exchange with the LNG in the heat exchanger 3, compressed in a liquid state, gasified, and then used as fuel gas of the high-pressure gas injection engine. In this case, the pressure control valve 12a installed in the boil-off gas liquefaction line L2 downstream of the heat exchanger 3 controls the pressure of the passing fluid to correspond to the pressure of the LNG in the fuel gas supply line L1.

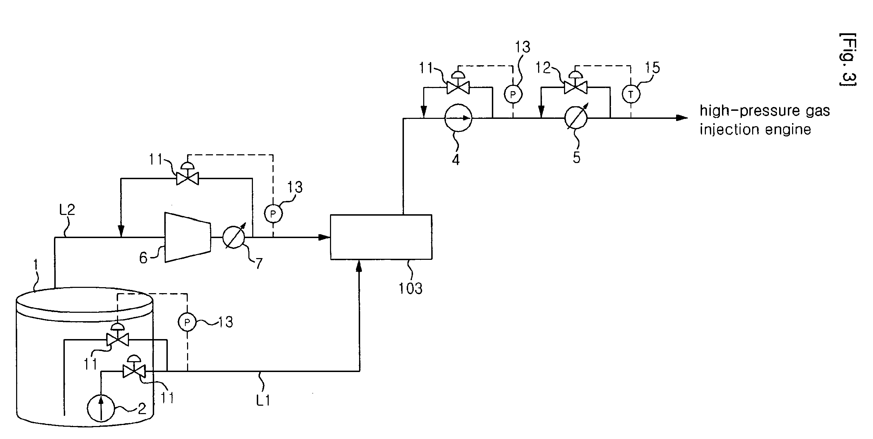

According to the above-mentioned embodiment, the heat exchanger 3 for exchanging heat between the LNG and the boil-off gas extracted from the LNG tank 1 is installed in the middle of the fuel gas supply line L1. However, instead of the heat exchanger 3, a recondenser for directly mixing the LNG and the boil-off gas may be installed. According to the embodiment illustrated in Figure 3, a recondenser 103 instead of a heat exchanger is installed in the fuel gas supply line L1. The boil-off gas liquefaction line L2 for extracting boil-off gas from an upper portion of the LNG tank 1 and returning the extracted boil-off gas to one side of the LNG tank 1 passes through the recondenser 103 installed in the middle of the fuel gas supply line L1. The recondenser 103 generates condensed LNG by mixing/liquefying the LNG extracted from a lower portion of the LNG tank 1 and the boil-off gas extracted from the upper portion of the LNG tank 1. The LNG condensed in the recondenser 103 is supplied to the high-pressure gas injection engine through the fuel gas supply line L1, or returned to the LNG tank 1 through the boil-off gas liquefaction line L2.

Also, according to the fuel gas supply system of a ship of the present invention, the boil-off gas generated in the LNG tank is not compressed in a gas state at a high pressure, and thus is not used as fuel gas of the high-pressure gas injection engine.

Additionally, the LNG tank used in the fuel gas supply system of a ship according to embodiments of the present invention may be designed such that it has strength enough to withstand a pressure increase due to the boil-off gas so as to allow the pressure increase due to the boil-off gas generated in the LNG tank during the voyage of the ship.

Further, the fuel gas supply system of a ship according to embodiments of the present invention may include a boil-off gas reliquefaction apparatus comprising a cold box and a refrigeration system. A heat exchanger is installed in the middle of the fuel gas supply line for compressing the LNG in the LNG tank and supplying the compressed LNG as fuel gas to the high-pressure gas injection engine, and the fuel gas generated in the LNG tank exchanges heat with the LNG in the middle of the boil-off gas supply line, and thereby is liquefied. Consequently, the boil-off gas reliquefaction apparatus which is additionally installed may be configured to have a small capacity.

Though the present invention has been shown and described herein with references to the specified embodiments, it would be understood that various modifications, variations, and corrections may occur to those skilled in the art, and thus the description and drawings herein should be interpreted by way of illustrative purpose without limiting the scope it of the present invention, as defined by the claims.

## Claims

1. A fuel gas supply system of a ship except an LNG carrier for supplying fuel gas to a high-pressure gas injection engine of the ship, the fuel gas supply system comprising:
an LNG tank (1);
a fuel gas supply line connected from the LNG tank (1) to the high-pressure gas injection engine of the ship;
means for compressing the LNG installed in the fuel gas supply line between the LNG tank (1) and the high-pressure gas injection engine; and
means for gasifying the LNG installed downstream of the compressing means in the fuel gas supply line, to gasify the compressed LNG,
a first pump (2) to compress the LNG and to communicate the compressed LNG downstream along the fuel gas supply line,
a second pump (4) to receive the compressed LNG and to compress the LNG to a pressure of 200 to 300 bar (gauge pressure) to meet the pressure requirements for the high-pressure gas injection engine.

2. The fuel gas supply system of a ship according to claim 1
wherein the compressing means is configured to extract LNG from the LNG tank (1), compress the extracted LNG at a high pressure, and supply the compressed LNG toward the high-pressure gas injection engine.

3. The fuel gas supply system of a ship according to claim 1
wherein the compressing means comprises one pump.

4. The fuel gas supply system of a ship according to claim 3
wherein the compressing means further comprises another pump.

5. The fuel gas supply system of a ship according to claim 3, further comprising:
a heat exchanger (3) installed downstream of the one pump in the fuel gas supply line; and
a boil-off gas liquefaction line connected from an upper portion of the LNG tank, passing through the heat exchanger, to one side of the LNG tank, the boil-off gas liquefaction line configured to liquefy boil-off gas generated in the LNG tank.

6. The fuel gas supply system of a ship according to claim 4, further comprising:
a heat exchanger (3) installed between the one pump and the other pump in the fuel gas supply line; and
a boil-off gas liquefaction line passing through the heat exchanger from an upper portion of the LNG tank and connected between the heat exchanger and the gasifying means.

7. The fuel gas supply system of a ship according to claim 3, further comprising:
a recondenser (103) installed downstream of the one pump in the fuel gas supply line; and
a boil-off gas liquefaction line connected from an upper portion of the LNG tank, passing through the recondenser, and to the LNG tank.

8. The fuel gas supply system of a ship according to claim 1
wherein the gasifying means is a heater.

9. The fuel gas supply system of a ship according to claim 1
wherein LNG is extracted from the LNG tank.

10. The fuel gas supply system of a ship according to claim 1
wherein the LNG tank is designed to withstand a pressure increase due to the boil-off gas so as to allow a pressure increase due to the boil-off gas generated in the LNG tank during the voyage of the ship.

11. The fuel gas supply system of a ship according to claim 1
wherein the ship is a ship such as a bulk carrier, a container ship, a crude oil tanker and chemical tanker and the LNG tank is an LNG fuel tank for storing LNG as fuel.

12. A fuel gas supply method for supplying fuel gas to a high-pressure gas injection engine of a ship except an LNG carrier, comprising:
extracting LNG from an LNG tank (1) of the ship;
compressing the extracted LNG by a first pump (2), communicating the compressed LNG downstream along a fuel gas supply line to a second pump (4) to receive the compressed LNG and to compress the LNG to a pressure of 200 to 300 bar (gauge pressure) to meet the pressure requirements for the high-pressure gas injection engine;
gasifying the compressed LNG; and
supplying the gasified LNG to the high-pressure gas injection engine.

13. The fuel gas supply method of a ship according to claim 12, further comprising:
extracting a boil-off gas from the LNG tank (1); and
exchanging heat between the LNG and the boil-off gas before supplying the LNG to the high-pressure gas injection engine.

14. The fuel gas supply method of a ship according to claim 13, further comprising:
liquefying the boil-off gas; and
returning the liquefied boil-off gas to the LNG tank (1).

## Patentansprüche

1. Treibgaszuführungssystem eines Schiffs mit Ausnahme eines LNG (liquefied natural gas; verflüssigtes Erdgas) -Trägers zum Zuführen von Treibgas zu einer Hochdruckgas-Einspritzmaschine des Schiffs, wobei das Treibgaszuführungssystem aufweist:
einen LNG-Tank (1);
eine Treibgaszuführleitung, die von dem LNG-Tank (1) zu der Hochdruckgas-Einspritzmaschine des Schiffs führt;
ein Mittel zum Komprimieren des LNG, das in der Treibgaszuführleitung zwischen dem LNG-Tank (1) und der Hochdruckgas-Einspritzmaschine installiert ist; und
ein Mittel zum Vergasen des LNG, das dem Mittel zum Komprimieren nachgeordnet in der Treibgaszuführleitung installiert ist, um das komprimierte LNG zu vergasen;
eine erste Pumpe (2) zum Komprimieren des LNG und zum Weiterleiten des komprimierten LNG stromabwärts entlang der Treibgaszuführleitung;
eine zweite Pumpe (4) zum Empfangen des komprimierten LNG und
zum Komprimieren des LNG auf einen Druck von 200 bis 300 Bar (Überdruck), um die Druckerfordernisse für die Hochdruckgas-Einspritzmaschine zu erfüllen.

2. Treibgaszuführsystem eines Schiffs nach Anspruch 1, wobei das Mittel zum Komprimieren dazu konfiguriert ist, LNG aus dem LNG-Tank (1) zu extrahieren, das extrahierte LNG mit hohem Druck zu komprimieren, und das komprimierte LNG der Hochdruckgas-Einspritzmaschine zuzuführen.

3. Treibgaszuführsystem eines Schiffs nach Anspruch 1, wobei das Mittel zum Komprimieren eine Pumpe aufweist.

4. Treibgaszuführsystem eines Schiffs nach Anspruch 3, wobei das Mittel zum Komprimieren eine andere Pumpe aufweist.

5. Treibgaszuführsystem eines Schiffs nach Anspruch 3, das des Weiteren aufweist:
einen Wärmetauscher (3), der der einen Pumpe nachgeordnet in der Treibgaszuführleitung installiert ist;
eine Boil-Off-Gas-Verflüssigungsleitung, die von einem oberen Abschnitt des LNG-Tanks, durch den Wärmetauscher hindurchgehend,
zu einer Seite des LNG-Tanks führt, wobei die Boil-Off-Gas-Verflüssigungsleitung dazu konfiguriert ist, Boil-Off-Gas, das in dem LNG-Tank erzeugt wird, zu verflüssigen.

6. Treibgaszuführsystem eines Schiffs nach Anspruch 4, das des Weiteren aufweist:
einen Wärmetauscher (3), der zwischen der einen Pumpe und der anderen Pumpe in der Treibgaszuführleitung installiert ist;
eine Boil-Off-Gas-Verflüssigungsleitung, die durch den Wärmetauscher von einem oberen Abschnitt des LNG-Tanks aus hindurchgeht und
zwischen den Wärmetauscher und das Vergasungsmittel geschaltet ist.

7. Treibgaszuführsystem eines Schiffs nach Anspruch 3, das des Weiteren aufweist:
einen Rückkondensator (103), der der einen Pumpe nachgeordnet in der Treibgaszuführleitung installiert ist; und
eine Boil-Off-Gas-Verflüssigungsleitung, die von einem oberen Abschnitt des LNG-Tanks, durch den Rückkondensator hindurchgehend,
zu dem LNG-Tank führt.

8. Treibgaszuführsystem eines Schiffs nach Anspruch 1, wobei das Vergasungsmittel eine Heizvorrichtung ist.

9. Treibgaszuführsystem eines Schiffs nach Anspruch 1, wobei LNG aus dem LNG-Tank extrahiert wird.

10. Treibgaszuführsystem eines Schiffs nach Anspruch 1, wobei der LNG-Tank dazu ausgelegt ist, einem Druckanstieg aufgrund des Boil-Off-Gases standzuhalten, um während der Fahrt des Schiffs einen Druckanstieg aufgrund des in dem LNG-Tank erzeugten Boil-Off-Gases zu erlauben.

11. Treibgaszuführsystem eines Schiffs nach Anspruch 1, wobei das Schiff ein Schiff wie zum Beispiel ein Massengutschiff, ein Containerschiff, ein Rohöltanker und ein Chemikalientanker ist, und der LNG-Tank ein LNG-Treibstofftank zum Lagern von LNG als Treibstoff ist.

12. Treibgaszuführverfahren zum Zuführen von Treibgas zu einer Hochdruckgas-Einspritzmaschine eines Schiffs mit Ausnahme eines LNG-Trägers, das umfasst:
Extrahieren von LNG aus einem LNG-Tank (1) des Schiffs;
Komprimieren des extrahierten LNG durch eine erste Pumpe (2) und Weiterleiten des komprimierten LNG stromabwärts entlang einer Treibgaszuführleitung zu einer zweiten Pumpe (4), um das komprimierte LNG aufzunehmen und das LNG auf einen Druck von 200 bis 300 Bar (Überdruck) zu komprimieren, um die Druckerfordernisse für die Hochdruckgas-Einspritzmaschine zu erfüllen;
Vergasen des komprimierten LNG; und
Zuführen des vergasten LNG zu der Hochdruckgas-Einspritzmaschine.

13. Treibgaszuführverfahren eines Schiffs nach Anspruch 12, das des Weiteren umfasst:
Extrahieren eines Boil-Off-Gases aus dem LNG-Tank (1); und
Austauschen von Wärme zwischen dem LNG und dem Boil-Off-Gas vor dem Zuführen des LNG zu der Hochdruckgas-Einspritzmaschine.

14. Treibgaszuführverfahren eines Schiffs nach Anspruch 13, das des Weiteren umfasst:
Verflüssigen des Boil-Off-Gases; und
Zurückführen des verflüssigten Boil-Off-Gases zu dem LNG-Tank (1).

## Revendications

1. Système d'alimentation de gaz combustible d'un navire à l'exception d'un navire de transport de GNL pour alimenter un gaz combustible dans un moteur à injection de gaz haute pression du navire, le système d'alimentation de gaz combustible comprenant :
une cuve (1) de GNL ;
une ligne d'alimentation de gaz combustible connectée depuis la cuve (1) de GNL au moteur à injection de gaz haute pression du navire ;
un moyen pour compresser le GNL installé dans la ligne d'alimentation de gaz combustible entre la cuve (1) de GNL et le moteur à injection de gaz haute pression ; et
un moyen pour gazéifier le GNL installé en aval du moyen de compression dans la ligne d'alimentation de gaz combustible, pour gazéifier le GNL compressé,
une première pompe (2) pour compresser le GNL et pour communiquer le GNL compressé vers l'aval le long de la ligne d'alimentation de gaz combustible,
une deuxième pompe (4) pour recevoir le GNL compressé et pour compresser le GNL à une pression de 200 à 300 bars (pression manométrique) pour répondre aux exigences de pression pour le moteur à injection de gaz haute pression.

2. Système d'alimentation de gaz combustible d'un navire selon la revendication 1, dans lequel le moyen de compression est configuré pour extraire le GNL de la cuve (1) de GNL, compresser le GNL extrait à une haute pression, et alimenter le GNL compressé vers le moteur à injection de gaz haute pression.

3. Système d'alimentation de gaz combustible d'un navire selon la revendication 1, dans lequel le moyen de compression comprend une pompe.

4. Système d'alimentation de gaz combustible d'un navire selon la revendication 3, dans lequel le moyen de compression comprend en outre une autre pompe.

5. Système d'alimentation de gaz combustible d'un navire selon la revendication 3, comprenant en outre :
un échangeur de chaleur (3) installé en aval de la première pompe dans la ligne d'alimentation de gaz combustible; et
une ligne de liquéfaction de gaz d'évaporation connectée depuis une partie supérieure de la cuve de GNL, passant à travers l'échangeur de chaleur, jusqu'à un côté de la cuve de GNL, la ligne de liquéfaction de gaz d'évaporation configurée pour liquéfier le gaz d'évaporation généré dans la cuve de GNL.

6. Système d'alimentation de gaz combustible d'un navire selon la revendication 4, comprenant en outre :
un échangeur de chaleur (3) installé entre la première pompe et l'autre pompe dans la ligne d'alimentation de gaz combustible ; et
une ligne de liquéfaction de gaz d'évaporation passant à travers l'échangeur de chaleur depuis une partie supérieure de la cuve de GNL et connectée entre l'échangeur de chaleur et le moyen de gazéification.

7. Système d'alimentation de gaz combustible d'un navire selon la revendication 3, comprenant en outre :
un recondenseur (103) installé en aval de la première pompe dans la ligne d'alimentation de gaz combustible ; et
une ligne de liquéfaction de gaz d'évaporation connectée depuis une partie supérieure de la cuve de GNL, passant à travers le recondenseur, et jusqu'à la cuve de GNL.

8. Système d'alimentation de gaz combustible d'un navire selon la revendication 1, dans lequel le moyen de gazéification est un dispositif de chauffage.

9. Système d'alimentation de gaz combustible d'un navire selon la revendication 1, dans lequel le GNL est extrait de la cuve de GNL.

10. Système d'alimentation de gaz combustible d'un navire selon la revendication 1, dans lequel la cuve de GNL est conçue pour supporter une augmentation de pression due au gaz d'évaporation de façon à permettre une augmentation de pression due au gaz d'évaporation généré dans la cuve de GNL lors du voyage du navire.

11. Système d'alimentation de gaz combustible d'un navire selon la revendication 1, dans lequel le navire est un navire tel qu'un vraquier, un porte-conteneurs, un transporteur de pétrole brut et un transporteur de produits chimiques et la cuve de GNL est une cuve de combustible GNL pour stocker du GNL comme combustible.

12. Procédé d'alimentation de gaz combustible pour alimenter un gaz combustible dans un moteur à injection de gaz haute pression d'un navire à l'exception d'un navire de transport de GNL, comprenant :
l'extraction de GNL d'une cuve (1) de GNL du navire ;
la compression du GNL extrait par une première pompe (2), communiquant le GNL compressé vers l'aval le long d'une ligne d'alimentation de gaz combustible jusqu'à une deuxième pompe (4) pour recevoir le GNL compressé et pour compresser le GNL à une pression de 200 à 300 bars (pression manométrique) pour répondre aux exigences de pression pour le moteur à injection de gaz haute pression ;
la gazéification du GNL compressé ; et
l'alimentation du GNL gazéifié dans le moteur à injection de gaz haute pression.

13. Procédé d'alimentation de gaz combustible d'un navire selon la revendication 12, comprenant en outre :
l'extraction d'un gaz d'évaporation de la cuve (1) de GNL ; et
l'échange de chaleur entre le GNL et le gaz d'évaporation avant l'alimentation du GNL dans le moteur à injection de gaz haute pression.

14. Procédé d'alimentation de gaz combustible d'un navire selon la revendication 13, comprenant en outre :
la liquéfaction du gaz d'évaporation ; et
le renvoi du gaz d'évaporation liquéfié jusqu'à la cuve (1) de GNL.
